Europäisches Patentamt

European Patent Office

Office européen des brevets

(19)

(11) Veröffentlichungsnummer: **0 206 310**
**A2**

(12) # EUROPÄISCHE PATENTANMELDUNG

(21) Anmeldenummer: **86108574.4**

(22) Anmeldetag: **24.06.86**

(51) Int. Cl.⁴: **B 29 C 53/56**
// B29K105:06, B29L23:00,
B29L9:00

(30) Priorität: **28.06.85 DE 3523660**

(43) Veröffentlichungstag der Anmeldung: **30.12.86**
**Patentblatt 86/52**

(84) Benannte Vertragsstaaten: **DE FR GB IT**

(71) Anmelder: **BASF Aktiengesellschaft,**
**Carl-Bosch-Strasse 38, D-6700 Ludwigshafen (DE)**

(72) Erfinder: **Holstein, Wolfgang, Dr., Luitpoldstrasse 26,**
**D-1000 Berlin 30 (DE)**
Erfinder: **Thorbeck, Juergen, Dr., Ruebenhofstrasse 16,**
**D-2000 Hamburg 63 (DE)**

(54) **Verfahren und Vorrichtung zur Herstellung eines Hohlkörpers aus Verbundmaterial.**

(57) Verfahren und Vorrichtung zur Herstellung von Hohlkörpern aus Verbundmaterial, mit einem Kern von Zylinderform mit vorzugsweise kreisförmigem Querschnitt und einer diesen Zylinder teilweise umgebenden Gegenfläche, wobei der Öffnungsbereich zum Zuführen des den Hohlkörper bildenden Materials dient, wobei zur Erzeugung von inhomogenen, Laminate aufweisenden Hohlkörpern die Gegenfläche als ein den Zylinder mit Ausnahme eines Öffnungsbereiches umschlingendes, unter Zugspannung stehend angetriebenes Förderband ausgebildet ist, innerhalb dessen der Zylinder schwimmend gelagert ist, und das Förderband von seiner auf dem späteren Transportweg dem Zylinder benachbarten Seite her zwecks Materialbeschikkung zugänglich ist.

## Verfahren und Vorrichtung zur Herstellung eines Hohlkörpers aus Verbundmaterial

Die Erfindung geht aus von einem Verfahren der im Oberbegriff des Anspruchs 1 angegebenen Art.

Es sind maschinelle Verfahren zur Herstellung nahtloser rohrförmiger Hohlkörper aus Verbundmaterial bekannt, die auf dem Wickeln von mit aushärtbarem Harzmaterial versehenen fadenförmigen Materialien beruhen. Ebenso sind Strang- oder Profilziehverfahren auf Fadenbasis bekannt. Weiterhin werden Schleuderverfahren eingesetzt. Eine Übersicht der Verfahren gibt die "Zeitschrift für wirtschaftliche Fertigung" 78 (1983) 12, S. 549ff.

Diese Verfahren erlauben nicht oder nur eingeschränkt die freie Wahl der Faserorientierungen, eine hohe Güte der Laminate und/oder die Möglichkeit des Einfügens von nichtfadenförmigen Materialien wie Stützstoffen.

Bei der Herstellung von derartigen Hohlkörpern aus Verbundmaterial besteht grundsätzlich die Schwierigkeit, die verschiedenen Materialkomponenten aus einem Materialvorrat heraus zu der Form des Hohlkörpers zu vereinigen. Dabei ist es generell bekannt, durch Strangpressen oder Stranggießen das den Hohlköper bildende Material aus einem Düsenquerschnitt unter Druck herauszuführen. Dabei besteht jedoch der Nachteil, daß einerseits auf eine große Fertigungsmenge abgezielt werden muß, da die Herstellung von Einzelstücken wegen des großen maschinellen Aufwand nicht lohnend ist. Zum anderen ist es schwierig, bei mehrschichtig aufgebauten Hohlkörpern die einzelnen Schichten in vorbestimmter Weise übereinander anzuordnen.

Aus der DE-PS 871 830 ist ein Verfahren zur Herstellung von Formkörpern durch Aufwickeln von sperrigen Faserstoffen bekannt, das vorrichtungsmäßig die Merkmale des Oberbegriffs des Anspruchs 1 aufweist. Dieses Verfahren gestattet zwar die Herstellung von Formkörpern aus Faserstoffen, welche mit einem aushärtenden Bindemittel versehen sind ohne daß es eines Extrusionsvorgangs bedarf. Der Formkörper besteht jedoch aus einem im wesentlichen homogenen Werkstoff, wobei eine Schichtung unterschiedlicher Werkstoffbestandteile des Formkörpers in radialer Richtung nicht möglich ist.

Des weiteren ist aus der DE-AS 22 01 485 ein Verfahren zum Herstellen eines rohrförmigen Hohlkörpers mit einer aus zwei Deckschichten und einer dazwischenliegenden Kernschicht bestehenden Wandung bekannt. Wobei aber ein die äußere Deckschicht bildendes Material von einer Rolle zugeführt werden muß und - um die äußere Form des Hohlkörpers durch eine entsprechende Zugspannung sicherzustellen - in seiner Abmessung länger sein muß als es dem entsprechenden Außenumfang des Hohlkörpers entspricht. Damit muß stets mehr Material beschafft werden als tatsächlich für die Erzeugung eines Hohlkörpers notwendig ist. Darüber hinaus steht das die Deckschicht bildende Material unter Zugspannung, die sich mit der zunehmenden Umschlingung des Hohlkörpers verändert, so daß ein ungleichmäßiger Wandungsdurchmesser bezüglich der Füllschicht die Folge ist. Zu dem muß zunächst einmal manuell für ein Anhaften des Anfangs der die Deckschicht bildenden Bahn auf der inneren auf dem Kern angeordneten Deckschicht unter Zwischenschaltung des Füllmaterials gesorgt werden, was im Einzelfall ebenfalls schwierig zu bewerkstelligen ist, da der Materialaufbau in nicht ausgehärtetem Zustand durch unkontrolliert aufgebrachte Zugspannungen naturgemäß leicht verformbar ist.

Zudem ist der Aufbau mehrschichtiger Laminate mit konzentrisch ausgebildeter Laminierung nur unter Schwierigkeiten möglich, da die Zuführung des Deckmaterials mehrfach unterbrochen werden müßte, wobei die formenden Anpreßkräfte unterbrochen werden.

Der im Anspruch 1 angegebenen Erfindung liegt die Aufgabe zugrunde, ein Verfahren anzugeben, das es ermöglicht, zum mehrschichtigen Aufbau von hohlen Formkörpern Deck- und Füllmaterial in vorgegebenen Mengen und in Richtung der Erstreckung der jeweiligen Schicht spannungsfrei heranzuführen.

Die Erfindung beruht auf der Erkenntnis, daß sich Hohlkörper mit einem kreiszylindrischen oder in anderer Weise verrundeten Zylinderquerschnitt bei laminatartigem Aufbau besonders günstig in der Weise fertigen lassen, daß die mit Kunstharz getränkten Deck- oder Füllschichten nacheinander mittels eines den Zylinder mindestens teilweise umschlingenden Förderbandes zugeführt werden, wobei ein in der Ebene geführter Bereich des Förderbandes zur Verfügung steht, auf dem die Deck- oder Füllmaterial in voller Breite flach aufgelegt und so auf den Kern bzw. die bereits vorhandenen Teile des Hohlkörpers ausgerollt werden können. Das Zuführen von flexiblen flächenartigen Bestandteilen erfolgt dabei spannungsfrei, so daß sich die Materialien flächenförmig ohne Blasenbildung selbsttätig an den Kern bzw. den vorhandenen Hohlkörper anlegen und mit diesem eine Einheit bilden. Bevorzugt umschlingt das Förderband den Kern um mehr als 270°, so daß die tangentiale Richtung bezogen auf den Kern beim Abheben des Förderbandes in einer Richtung auf den Kern hinlaufenden Teil des Förderbandes trifft, der eine Komponente in Transportrichtung des auf den Kern zulaufenden Bandes hat. Auf diese Weise wird das Material an der Oberfläche des Kerns stets wieder "eingerollt", so daß der zu erzeugende Hohlkörper in seiner Struktur stets geschlossen bleibt.

Wenn das zum Kern hin laufende Band zuvor eine ebene Unterstützungsfläche passiert, können in diesem Bereich die den Hohlköper bildenden Materialien gestreckt aufgelegt werden, wobei bei einem Naßverarbeitungsverfahren die verschmutzte Transportseite des Bandes oben zu liegen kommt.

Auf diese Weise läßt sich - folgend auf die innere Deckschicht - beliebiges Stütz- oder Füllmaterial einrollen, bevor die äußere Deckschicht eingefügt wird, so daß eine große Variation bezüglich des inhomogenen Aufbaus des Hohlkörpers besteht, wobei die Struktur im wesentlichen konzentrisch ist und sich in tangentialer Richtung konstante Festigkeitsverhältnisse ergeben. Bei der Zuführung des den Formkörper bildenden Materials läßt sich einerseits eine einlagige Umschlingung in voller Breite des Kernes wählen - andererseits besteht aber auch die vorteilhafte Möglichkeit, Deckmaterial oder Füll- und Stützstoffe helixförmig einzubringen. Bei der Optimierung der Festigkeit des Verbundkörpers ist es vielfach vorteilhaft, wenn das Füllmaterial vorzugsweise senkrecht zur Oberfläche gerichtete Druckkräfte aufzunehmen in der Lage ist (Waben- oder "Honeycomb"-Material), während das Deckmaterial in erster Linie Spannungen in der Ebene der Oberfläche aufnimmt.

Als Füllmaterial kommen technische Schäume aus PVC, PU oder Acryl in Betracht oder aber Wabenmaterial aus Aluminium, Polycarbonat, ABS etc. Die Deckschichten werden aus CFK, GFK oder AFK hergestellt, während als Verbindungsmaterial Epoxidharz, Polyester, Duroplast oder dünnflüssige Phenolharze verwendet werden. Das Gewebematerial des Bandes ist bevorzugt antiadhäsiv ausgebildet und besteht günstigerweise aus PTFE. Die Füllstoffe können auch ledigliche als "Platzhalter" dienen, in dem sie unter Hinzufügung von Trennmittel zunächst mit in den Formkörper eingerollt werden, um nach dem Entnehmen des Kerns dann ebenfalls wieder entfernt zu werden. Auf diese Weise ergibt sich die vorteilhafte Möglichkeit, den Formkörper dreidimensional weitgehend frei zu gestalten. Das temporäre Füllmaterial kann dabei vorzugsweise helixförmig oder in konzentrischen Ringen bzw. Gitter- oder Wabenstruktur eingefügt werden, so daß auch die Elastizitätseigenschaften des Formkörpers weitgehend frei wählbar sind.

Bei der Erfindung ist vorteilhaft, daß insbesondere die Anordnung der Fasern in der konstruktiv erforderlichen Orientierung und räumlichen Struktur erfolgen kann und das Einbringen nicht wickelbarer Materialien wie Stütz und Füllwerkstoffe, zusätzlicher formgebender Elemente und Oberflächenstoffe erlauben.

Um die von den jeweiligen verwendeten Werkstoff-Kombinationen und räumlichen Strukturen abhängig notwendigen Anpreßkräfte zu erreichen, ist die Spannung des Förderbandes einstellbar. Mit der Spannvorrichtung wird zugleich die Durchmesserveränderung während des Wickelns abgefangen.

Nach einer weiteren Ausbildung der Erfindung wird nach dem Aufbringen des Materials auf den Formkern ein spezielles Preßband eingewickelt, gegebenenfalls unter erhöhter Spannkraft. Dadurch wird das Laminat verdichtet, die restliche Luft bzw. überschüssiges flüssiges Harz herausgedrückt, das Material vergleichmäßigt und nach dem Herausnehmen der bewickelten Form aus der Vorrichtung die Formtreue erhalten. Um die beim Aufbringen der Materialien eingeschlossene Luft entweichen zu lassen, ist das Förderband perforiert ausgebildet.

Durch Strahlung, die das Transportband durchdringt, kann bei dem aufgebrachten Material noch in der Vorrichtung der Aushärte- oder Klebeprozeß eingeleitet oder vollständig vollzogen werden.

Materialien wie Prepregs, Gelege, Gewebe, Harz, Stützstoffe, Füllstoffe, formgebende Elemente und Oberflächenstoffe können auf das Förderband gegeben werden, wobei das angetriebene Förderband um den vom Band synchron mitbewegten Formkern geführt wird, auf den die mitgeführten Materialien schichtweise abgelegt werden. Dabei wird sowohl mit Harzen naß in naß gearbeitet als auch mit vorimprägnierten Halbzeugen trocken gearbeitet. Als Stützwerkstoffe kommen auch Wellpappen und andere Füllmaterialien für Verpackungszwecke in Betracht, welche in der Lage sind, Druckspannungen aufzunehmen.

Die Verdichtung des Materials bei Aufwickeln auf dem Kern wird durch die Vorspannung gesteuert, wobei bevorzugt in einer Umlenkrolle vor dem Auflagetisch eine Bremse vorgesehen ist, welche die Bandspannung einstellbar beeinflußt.

Der Formkörper läuft vollkommen freitragend und kann mit dem darauf aufgewickelten Hohlkörper nach dessen Fertigstellung aus der Vorrichtung entfernt werden. Zum Entfernen des Hohlkörpers wird die Umlenkrolle, welche das Tansportband um den Hohlkörper herum spannt, von der Auflagefläche weg nach oben hin bewegt, so daß der Hohlkörper zwischen dieser Umlenkrolle und dem Auflagetisch herausgenommen werden kann. Das den Hohlkörper umschlingende Band spannt sich dabei, wobei die sich ergebende Längendifferenz des Transportbandes bevorzugt von einer unter dem Tisch angeordneten elastisch gelagerten Spannrolle aufgenommen wird. Auf diese Weise läßt sich der Kern leicht auswechseln bzw. durch einen neuen ersetzen, so daß ein kontinuierlicher Herstellungsprozeß gewährleistet ist. Weitere Umlenkrollen führen das Band auf dem Wege um die Vorrichtung herum, wobei eine mit einem Antriebsmotor verbundene Rolle bevorzugt unterhalb des Tisches in Bewegunsrichtung des Bandes vor der Spannrolle angeordnet ist.

Vorteilhafte Weiterbildungen der Erfindung - sowohl des Verfahrens als auch der Vorrichtung zu dessen Durchführung - sind in den Unteransprüchen gekennzeichnet bzw. werden nachstehend zusammen mit der Beschreibung der bevorzugten Ausführung der Erfindung anhand der Figuren näher dargestellt. Es zeigen:

Figuren 1a und b ein erstes Ausführungsbeispiel der Erfindung in Betriebs- und Ruheposition sowie

Figur 2 ein weiteres Ausführungsbeispiel der Erfindung in detaillierter Darstellung.

Ein Transport- oder Förderband 1 wird zunächst über einen Auflagetisch 2 geführt, wobei das Tranportband 1 vor dem Auflagetisch 2 mittels einer ersten Umlenkrolle 3 mit Bremsen 3a um die Vorderkante des Tisches 2 herumgeführt wird und anschließend einen Formkörper 4 mit einem Werkstück 5 umschließt bis es nach einer Umschlingung von mehr als 270° von einer zweiten Umlenkrolle 6 so umgelenkt wird, daß es vom Werkstück abgehoben wird und entfernt von diesem um dieses herum zurück zum Anfang des Tisches gelangt. Es passiert dabei weitere Umlenkrollen 7 bis 9, eine mit einem Antriebsmotor 10 verbundene Antriebsrolle 11 und eine Spannrolle 12, welche unterhalb des Tisches mit einer Spannvorrichtung 13 verbunden ist und das Band unabhängig von Größe des Formkörpers 4 auch dann gespannt hält, wenn der Formkörper vollständig entfernt ist. Das Transportband ist bevorzugt gelocht ausgebildet, so daß im Verlauf des Trocknungs- bzw. Aushärtungsvorgangs der Materialien entstehende Gase entweichen können. Eine Perforation bzw. Verzahnung an den Rändern des Bandes sorgt in Verbindung mit entsprechenden Eingriffsmitteln für eine schlupffreie Übertragung der Atriebskräfte.

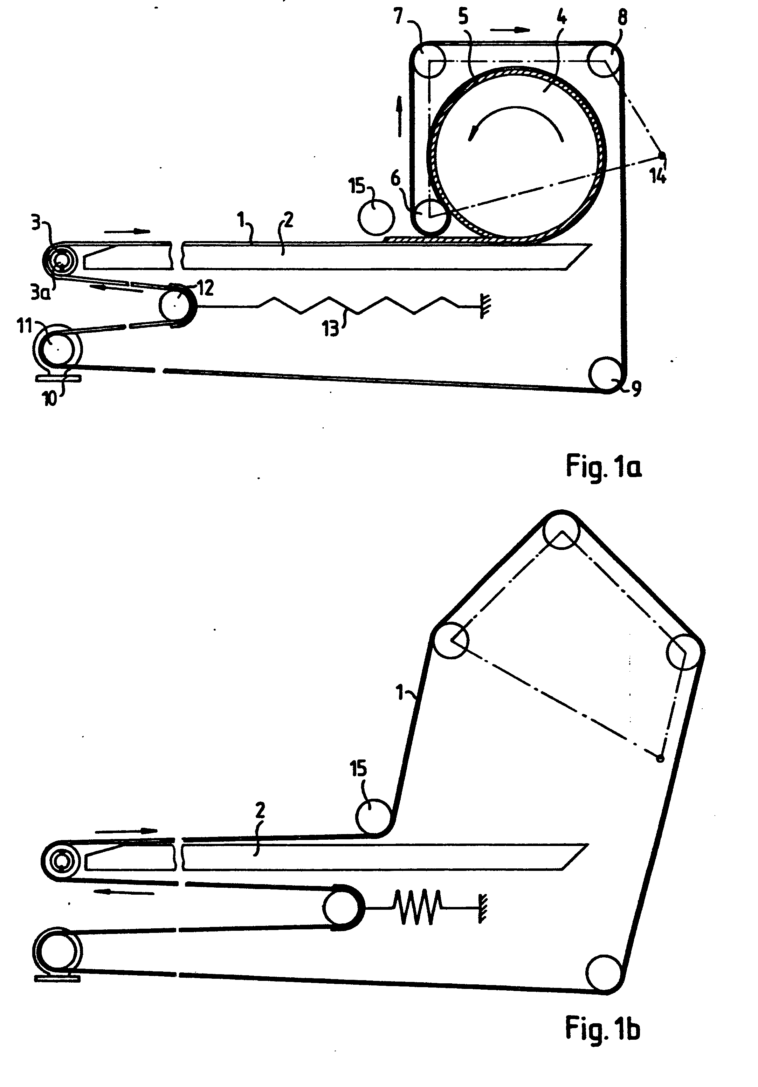

Die Rollen 6, 7 und 8 sind gemeinsam um einen Drehpunkt 14 schwenkbar, wobei die zweite Umlenkrolle 6 zusammen mit den Rollen 7 und 8 nach oben klappbar ist, wie es in Figur 1b dargestellt ist. Der Formkörper 4 ist in der hochgeklappten Stellung der Rollen von einer Bedienungsperson in Richtung auf die erste vor dem Tisch 2 angeordnete Umlenkrolle hin entfernbar, so daß das Werkstück 5 von dem Formteil 4 abgezogen werden. Die aus der Spannrolle 12 der Zugfeder 13 bestehende Spannvorrichtung paßt die Bandlänge auch dem sich mit zunehmendem Materialquerschnitt vergrößende Durchmesser des Werkstücks 5 an.

Bei der in Figur 1b dargestellten Ruhestellung der Vorrichtung wird das Band 1 über eine zusätzliche Umlenkrolle 15, welche in der Betriebstellung nicht mit dem Band 1 in Eingriff ist so gehalten, daß es weiterhin oberhalb der Platte 2 geführt ist und erst kurz vor der Arbeitsposition der Rolle 6 nach oben geführt wird. Auf diese Weise ist der Formkörper 4 innerhalb eines definierten Bereiches der Vorrichtung einsetz- bzw. entnehmbar.

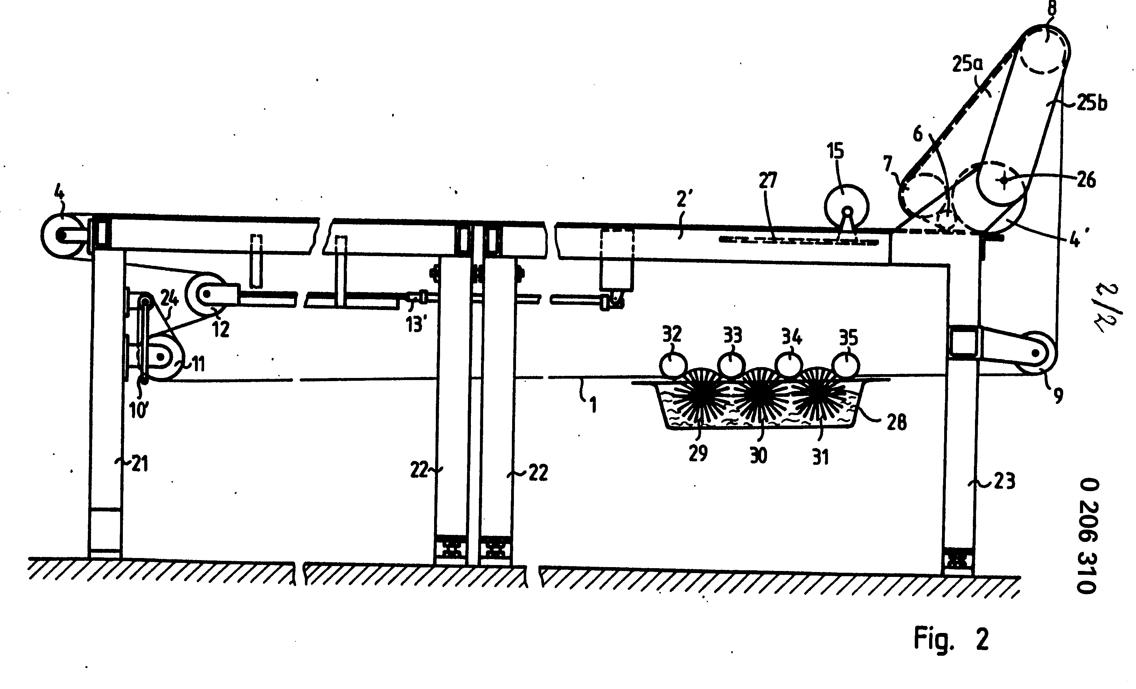

Das in Figur 2 wiedergegebene detaillierte Ausführungsbeispiel der erfindungsgemäßen Anordnung zeigt einige weitere konstruktive Einzelheiten, wobei bezüglich der prinzipiellen Anordnung die Bezugszeichen übernommen wurden, die in Figuren 1a und 1b verwendet wurden. Bei abgeänderter Darstellung wurden die Bezugszeichen gegebenenfalls mit einem Apostroph (') versehen.

Der Auflagetisch 2' ist in Figur 2 verkürzt wiedergegeben und weist Beine 21 bis 23 auf, die mit dem Boden verschraubt sind.

Die Feder 13 der Spannrolle 12 ist teleskopartig in einem Zylinder geführt und gleicht die Unterschiede der Bandlänge im Verlaufe eines Arbeitsvorgangs aus. Die Antriebsrolle 11 wird bei dem in Figur dargestellten vereinfachten Ausführungsbeispiel mittels eines Antriebsriemens 24 von einer Handkurbel 10' angetrieben, was eine Ausführung der Vorrichtung zur Herstellung geringer Stückzahlen entspricht. Bei der Darstellung gemäß Figur 2 ist die erfindungsgemäße Vorrichtung in Arbeitsstellung im Zusammenhang mit einem relativ kleinen Kern 4' wiedergegeben, wobei die Rollen 6 und 7 am Ende eines gemeinsamen Hebels 25a angeordnet sind, der seinerseits am Ende eines Hebels 25b zusammen mit der Umlenkrolle 8 gelenkig gelagert ist, wobei der Hebel 25b um einen Drehpunkt 26 schwenkbar ist, welcher sich leicht erhöht am Ende des Tisches 2' befindet. Dadurch, daß die Rolle 6 relativ klein ausgeführt ist, kann sich das Band 1 weit um den Formkörper 4' mit zylindrischem Querschnitt herumschmiegen, so daß der Andruck der jeweils zuletzt aufgebrachten den Hohlkörper bildenden Materialteile stets gewährleistet ist. Die Rolle 15 ist auf einem Bock in Schienen 27 in Längsrichtung des Tisches 2' verschiebbar, so daß eine Anpassung an verschiedene Größen von Formkörpern erfolgen kann.

Im zurücklaufenden Teil des Bandes ist unterhalb der Platte 2' eine Reinigungsvorrichtung 28 vorgesehen, bei der Bürsten 29 bis 31 der mit dem Werkstück in Verbindung stehenden Oberfläche des Bandes zugewandt sind und dieses im Rücklauf von Harzresten mit einem Lösungsmittel reinigen, welches sich in einer Wanne befindet. Gegenrollen 32 bis 35 sorgen dazu von der Gegenseite des Bandes her für einen genügenden Andruck. Als alternatives oder zusätzliches Reinigungsmittel dienen (in der Zeichnung nicht dargestellte) - gegebenenfalls rotierende - Spüldüsen, wie sie beispielsweise bei Geschirrspülern Verwendung finden.

Auf diese Weise wird das Band von anhaftenden Restbestandteilen befreit, so daß sich im Auflagebereich des Tisches keine Materialreste mehr befinden und das neue auf den Formkörper aufzuwickelnde Material stets eine saubere Transportfläche vorfindet.

Das erfindungsgmäße Verfahren bzw. die zugehörige Vorrichtung läßt sich auf vielfache Weise verwenden, wobei jede Art von flexiblen Stützmaterialien zwischen den die Oberfläche des Hohlkörpers bildenden Deckmaterialien und gegebenenfalls Zwischenschichten eingebracht werden können. Der Herstellungsvorgang kann auch "endlos" erfolgen, wenn das Band einen Teil einer Schraubenwindung um den Formkörper herum bildet und das einlaufende Material insoweit schräg eingeführt wird. Dadurch ist die Länge des Formkörpers nicht durch die Breite des Bandes beschränkt, wenn dafür gesorgt wird, daß die Bereiche seitlich der Vorrichtung das Auftreten des Formkörpers nicht behindern.

Durch Einlegen von temporären Füllmaterialien, die sich nach Fertigstellung des Hohlkörpers nach innen oder außen (unter Benutzung eines Trennmittels) entfernen lassen, können Körper mit in axialer Richtung wechselndem Querschnitt erzeugt werden, so daß eine zusätzliche Anpassung an bestehende Festigkeits- bzw. Elastizitätsforderungen möglich ist.

Zur Aushärtung des Formkörpers ist die Behandlung mit einer Strahlungsquelle vorgesehen, die bevorzugt außerhalb – oder auch innerhalb – des Zylinders angeordnet, in den Zeichnungen aber nicht dargestellt ist. Es ist jedoch ersichtlich, daß für eine derartige Baugruppe ausreichend Raum zur Verfügung steht und sie völlig unabhängig von der laufenden Materialzuführung handhabbar ist. Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

Patentansprüche

1.　Verfahren zur Herstellung eines Hohlkörpers aus Verbundmaterial, unter Verwendung eines Kerns von Zylinderform mit vorzugsweise kreisförmigem Querschnitt und einer diesen Zylinder teilweise umgebenden Gegenfläche, wobei der Öffnungsbereich zum Zuführen des den Hohlkörper bildenden Materials dient,

d a d u r c h   g e k e n n z e i c h n e t ,

daß ein inhomogener, Laminate aufweisender Hohlkörper dadurch erzeugt wird, daß als Gegenfläche ein den Zylinder mit Ausnahme eines Öffnungsbereiches umschlingendes, unter Zugspannung angetriebenes Förderband verwendet wird, in die der Zylinder schwimmend eingelegt wird, wobei die Materialbeschickung durch Auflegen auf derjenigen Seite des Förderbands erfolgt, die auf seinem späteren Transportweg dem Zylinder benachbart ist.

2.　Verfahren nach Anspruch 1, d a d u r c h   g e - k e n n z e i c h n e t , daß der zur Materialbeschickung zugängliche Bereich des Förderbands sich im wesentlichen in einer Ebene erstreckt, wobei die Schichten des das Laminat bildenden Materials in Richtung der Banderstreckung im wesentlichen spannungsfrei aufgelegt werden.

3.　Verfahren nach einem der vorangehenden Ansprüche, d a d u r c h   g e k e n n z e i c h n e t , daß der Winkelbereich der Umschlingung des Förderbands bezüglich des Zylinders in der Weise größer als 270° gewählt ist, daß eine Tangente an den Zylinder in dem Punkt, an dem das Band in Antriebsrichtung gesehen den Zylinder verläßt, mit einer parallel zur Antriebsrichtung des Bandes gerichteten Komponente auf das zum Zylinder hin bewegte Trum des Förderbands stößt.

4.     Verfahren nach einem der vorangehenden Ansprüche, d a d u r c h   g e k e n n z e i c h n e t ,   daß das Förderband in Antriebsrichtung vor der Zylinder abgebremst wird.

5.     Verfahren nach Anspruch 4, d a d u r c h   g e - k e n n z e i c h n e t ,   daß die Abbremsung zwischen Antrieb und Zylinder erfolgt.

6.     Verfahren nach einem der vorangehenden Ansprüche, d a d u r c h   g e k e n n z e i c h n e t ,   daß außer dem das Laminat bildenden Material in Antriebsrichtung des Förderbandes Materialteile, insbesondere Streifen eines Füllmaterials eingelegt werden, welche später aus dem fertigen Formkörper wieder entfernt werden und lediglich als temporärer Platzhalter dienen.

7.     Verfahren nach Anspruch 6, d a d u r c h   g e - k e n n z e i c h n e t ,   daß das temporäre Füllmaterial mit einem Trennmittel versehen ist.

8.     Verfahren nach einem der vorangehenden Ansprüche, d a d u r c h   g e k e n n z e i c h n e t ,   daß das auf den Zylinder gepreßte Material durch das Förderband hindurch mittels Strahlung beeinflußt wird.

9.     Verfahren nach einem der vorangehenden Ansprüche, d a d u r c h   g e k e n n z e i c h n e t , daß Deck- und Füllmaterial auf den Zylinder helixförmig aufgewickelt und er Formkörper seitlich aus der Vorrichtung herausgeführt wird, so daß die Länge des Werkstücks die Breite des Zylinders übertrifft und die Fertigung gegebenenfalls "endlos" erfolgt.

10.     Vorrichtung zur Durchführung des Verfahrens nach einem der vorangehenden Ansprüche,

d a d u r c h   g e k e n n z e i c h n e t , ·

daß zur Erzeugung eines inhomogenen, Laminate aufweisenden Hohlkörpers die Gegenfläche als ein den Zylinder mit Ausnahme eines Öffnungsbereiches umschlingendes, unter Zugspannung stehend angetriebenes Förderband ausgebildet ist, innerhalb dessen der Zylinder schwimmend gelagert ist, wobei das Förderband von seiner auf dem späteren Transportweg dem Zylinder benachbarten Seite her zwecks Materialbeschickung zugänglich ist.

11. Vorrichtung nach Anspruch 10, g e k e n n z e i c h - n e t   d u r c h die Anordnung von Umlenkrollen, derart, daß der zur Materialbeschickung zugängliche Bereich des Förderbands sich im wesentlichen in einer Ebene erstreckt, wobei die Schichten des das Laminat bildenden Materials in Richtung der Banderstreckung spannungsfrei auflegbar sind.

12. Vorrichtung nach einem der vorangehenden Ansprüche, d a d u r c h   g e k e n n z e i c h n e t , daß der Winkelbereich der Umschlingung des Förderbands bezüglich des Zylinders in der Weise größer als 270° gewählt ist, daß eine Tangente an den Zylinder in dem Punkt, an dem das Band in Antriebsrichtung gesehen den Zylinder verläßt, mit einer parallel zur Antriebsrichtung des Bandes gerichteten Komponente auf das zum Zylinder hin bewegte Trum des Förderbands stößt.

13. Vorrichtung nach einem der vorangehenden Ansprüche, d a d u r c h   g e k e n n z e i c h n e t , daß eine einstellbare Bremse für das Förderband in Antriebsrichtung vor dem Zylinder vorgesehen ist.

14. Vorrichtung nach einem der vorangehenden Ansprüche, d a d u r c h   g e k e n n z e i c h n e t , daß das Förderband endlos ausgebildet ist.

15. Vorrichtung nach einem der Ansprüche 13 oder 14, d a d u r c h   g e k e n n z e i c h n e t , daß die Bremse zwischen Antrieb und Zylinder vorgesehen ist.

16. Vorrichtung nach einem der vorangehenden Ansprüche, d a d u r c h   g e k e n n z e i c h n e t , daß eine erste Umlenkrolle - in Antriebsrichtung des Förderbandes gesehen - vor dem zur Materialbeschickung zugänglichen Bereich und eine zweite am Ende des den Zylinder umschlingenden Bereichs vorgesehen ist.


17. Vorrichtung nach Anspruch 16, d a d u r c h  g e -
k e n n z e i c h n e t , daß die zweite Rolle in
Richtung von dem zur Materialbeschickung zugänglichen
Bereich weg verschwenkbar angeordnet ist.


18. Vorrichtung nach Anspruch 17, d a d u r c h  g e -
k e n n z e i c h n e t , daß mit der zweiten Rolle
weitere Rollen, die eine Bandführung um den Zylinder
herum bewirken, an einem gemeinsamen Trägerelement um
eine Achse schwenkbar gelagert sind.


19. Vorrichtung nach Anspruch 18, d a d u r c h  g e -
k e n n z e i c h n e t , daß eine dritte Rolle
oberhalb des zur Materialbeschickung zugänglichen
Bereichs in Antriebsrichtung des Förderbands vor der
zweiten Rolle angebracht ist.


20. Vorrichtung nach einem der vorangehenden Ansprüche,
d a d u r c h  g e k e n n z e i c h n e t , daß eine
Längenausgleichvorrichtung für das Förderband vorgesehen
ist, welche dessen Verkürzung bei fehlendem Zylinder
kompensiert.

21. Vorrichtung nach einem der vorangehenden Ansprüche, d a d u r c h g e k e n n z e i c h n e t , daß die Längenausgleichsvorrichtung aus einer vierten Umlenkrolle besteht, welche unterhalb des zur Materialbeschickung zugänglichen Bereichs unter Federspannung parallel zu diesem verschieblich ist.

22. Vorrichtung nach einem der vorangehenden Ansprüche, d a d u r c h g e k e n n z e i c h n e t , daß der zur Materialbeschickung zugängliche Bereich des Förderbandes oberhalb einer tischartigen Fläche angeordnet ist.

23. Vorrichtung nach einem der vorangehenden Ansprüche, d a d u r c h g e k e n n z e i c h n e t , daß Mittel vorgesehen sind, um durch das Förderband hindurch das auf den Zylinder gepreßte Material durch Strahlung zu beeinflussen.

24. Vorrichtung nach einem der vorangehenden Ansprüche, d a d u r c h g e k e n n z e i c h n e t , daß das Förderband im Bereich seiner Seitenkanten mit Eingriffsmitteln für die Antriebsvorrichtung, insbesondere Zahnriemen oder einer Perforation, versehen ist.

Fig. 1a

Fig. 1b

0 206 310

Fig. 2